# EUROPÄISCHE PATENTSCHRIFT

(11) **EP 0 807 040 B1**
(45) Veröffentlichungstag und Bekanntmachung des Hinweises auf die Patenterteilung: **15.12.1999**
(21) Anmeldenummer: 96902948.7
(22) Anmeldetag: 31.01.1996
(51) Int. Cl.: B60T 8/48, B60T 8/42, B60T 8/24

(54) **Hydraulische Kraftfahrzeugbremsanlage mit Bremsschlupfregelung und automatischem Bremseingriff zur Antriebs- und oder Fahrdynamikregelung**
Motor vehicle hydraulic braking system with brake slip control and automatic brake actuation for traction and/or vehicle stability control
Système hydraulique de freinage pour véhicules à moteur, avec réglage de patinage et freinage automatique pour le démarrage et/ou de la dynamique de conduite

(30) Priorität: 01.02.1995 DE 19503074
(43) Veröffentlichungstag der Anmeldung: 19.11.1997
(73) Patentinhaber: Continental Teves AG & Co. oHG, 60488 Frankfurt (DE)
(72) Erfinder: BECK, Erhard, D-35781 Weilburg (DE)
(86) Internationale Anmeldenummer: EP9600379
(87) Internationale Veröffentlichungsnummer: WO9623681

(56) Entgegenhaltungen:
- EP-A- 0 418 602
- WO-A-92/18363
- WO-A-93/09010
- DE-A- 4 039 088
- DE-A- 4 138 027
- DE-A- 4 202 388
- US-A- 5 364 176

## Beschreibung

Die Erfindung betrifft eine hydraulische Kraftfahrzeugbremsanlage mit Bremsschlupfregelung und automatischem Bremseneingriff zur Antriebs- und/oder Fahrdynamikregelung, nach den Oberbegriffen der Patentansprüche 1 und 8.

Aus der DE 42 32 311 C1 ist bereits eine hydraulische Kraftfahrzeugbremsanlage mit Blockierschutzeinrichtung hervorgegangen, die überdies zur Verbesserung des Fahrzeugspurverhaltens mit einem automatischen Bremseneingriff zur Fahrdynamikregelung versehen ist. Sowohl zur Fahrdynamikregelung als auch zur Antriebsschlupfregelung bedarf es besonderer Maßnahmen, um hinreichend schnell das für den Bremseneingriff notwendige Druckmittel mittels einer Pumpe bereit zu stellen. Hierzu sieht die zum Stand der Technik genannte Bremsanlage vor, daß jeweils stromaufwärts, das heißt saugseitig zum Pumpenkreis der Bremsanlage, eine separate Hilfsdruckversorgung angeordnet ist, die aus einer Hilfsdruckpumpe, aus Vorladekolben zur Speicherung und Bereitstellung eines ausreichenden Druckmittelvolumens für jeden Pumpenkreis sowie aus diversen Ventilen besteht. Dies führt zu einem relativ großen konstruktiven Aufwand.

Ferner geht bereits aus der WO,A,93/09010, die die Merkmale der Oberbegriffe der Ansprüche 1 und 8 aufweist, eine schlupfgeregelte hydraulische Bremsanlage hervor, dessen speziell gestalteter Niederdruckspeicher jeweils zur Antriebsschlupfregelung unter leichtem Vordruck ein definiertes Bereitschaftsvolumen über ein elektromagnetisch zu öffnendes Ventil der Saugseite der Pumpe zur Verfügung stellt. Bei diesem Niederdruckspeicher reduziert sich infolge des im Vorladekolben installierten, federbelasteten Sitzventils sowohl das Vorladevolumen als auch der Vorladedruck.

Daher ist es die Aufgabe der Erfindung, eine hydraulische Kraftfahrzeugbremsanlage mit Bremsschlupfregelung und/oder automatischem Bremseneingriff zur Antriebs- und/oder Fahrdynamikregelung derart zu gestalten, daß mit relativ geringem Aufwand ein ausreichendes Druckmittelvolumen der für die Druckversorgung der Radbremsen verantwortlichen Pumpe zwecks schnellem Ansprechverhalten möglichst drosselfrei zur Verfügung steht.

Diese Aufgabe wird erfindungsgemäß durch die kennzeichnenden Merkmale der Patentansprüche 1 und 8 gelöst.

Weitere Einzelheiten der Erfindung werden im nachfolgenden anhand mehrerer Ausführungsbeispiele (Figuren 1 bis 5) beschrieben.

Es zeigen:
- Figur 1: den prinzipiellen schaltungstechnischen sowie konstruktiven Aufbau einer ersten Ausführungsform der Erfindung,
- Figur 2: eine alternative Ausführung zur in Figur 1 gezeigten Ventilanordnung,
- Figur 3: eine vorteilhafte konstruktive Gestaltung des aus den Figuren 1 und 2 bekannten Rückschlagventils im Zusammenwirken mit den weiteren, erfindungsrelevanten Merkmalen,
- Figur 4: eine Ausgestaltung des Druckmittelspeichers im Zusammenwirken mit dem hierfür erforderlichen Schaltungsaufbau,
- Figur 5: funktionelle und konstruktive Merkmale zur Betätigung der Mehrwegeventile im Zusammenhang mit dem schaltungstechnischen Gesamtaufbau.

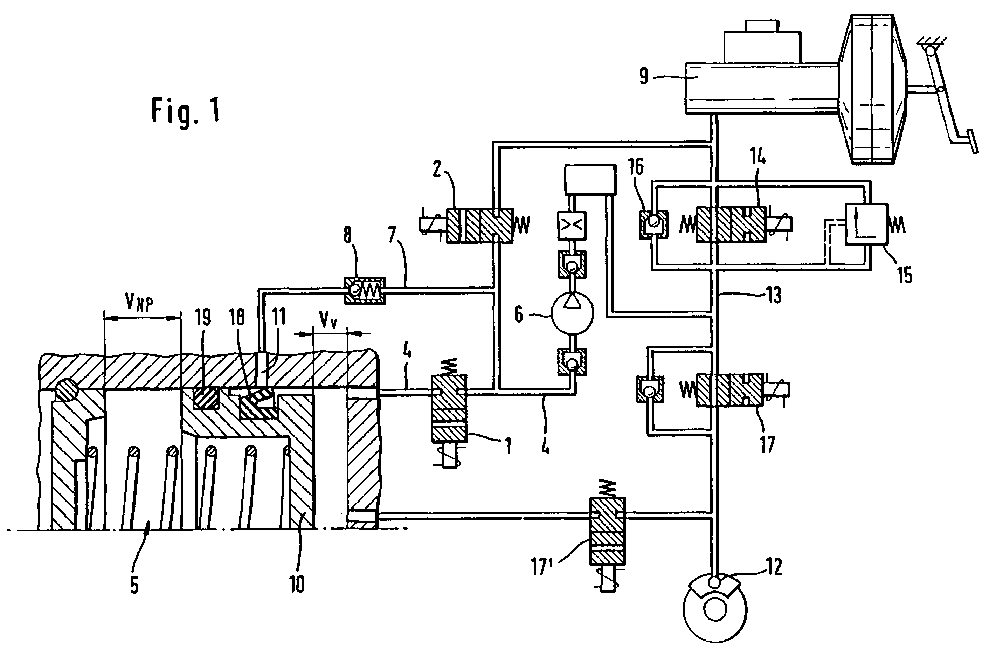

Die Figur 1 zeigt den prinzipiellen Schaltungsaufbau zur Betätigung einer Radbremse 12, die sowohl mittels Bremsschlupfregelung und automatischem Bremseneingriff zur Antriebs- und/oder Fahrdynamikregelung geeignet ist. Am Bremsdruckgeber 9 schließt sich eine zur Radbremse 12 führende Hauptdruckleitung 13 an, in die ein elektromagnetisch betätigbares Trennventil 14, parallel dazu ein Druckbegrenzerventil 15 sowie ein in Richtung des Bremsdruckgebers sperrendes Rückschlagventil befinden. Zwischen Trennventil 14 und Radbremse 12 befinden sich ferner die Druckmodulationsventile 17,17', wobei das eine Druckmodulationsventil 17 als elektromagnetisch stromlos in der Grundstellung offengeschaltetes Einlaßventil ausgeführt ist und das weitere Druckmodulationsventil 17' in seiner Grundstellung elektromagnetisch die Druckmittelverbindung von der Radbremse 12 zu einem Druckmittelspeicher 5 sperrt. Der Druckmittelspeicher 5 weist im wesentlichen einen Ladekolben 10 auf, der zum Zwecke der Abdichtung im Gehäuse mit einer Manschettendichtung 18 und einer Ringdichtung 19 an seinem Umfang versehen ist. In der gezeigten Abbildung befindet sich der Ladekolben 10 in einer Position, die einer Teilaufladung des Druckmittelspeichers 5 entspricht. Während der Teilaufladung ergibt sich ein für die Pumpe 6 erforderliches Vorladevolumen Vv, das über die saugseitig an der Pumpe 6 angeschlossene Druckmittelverbindung 4 unter Wirkung der Federvorspannkraft am Ladekolben 10 zur Pumpe 6 verdrängt werden kann. Zur Förderung des Vorladevolumens Vv in Richtung der Pumpe 6 befindet sich in der Druckmittelverbindung 4 ein in der Grundstellung elektromagnetisch gesperrtes Mehrwegeventil 1. Dieses verhindert zunächst ein vorzeitiges Entleeren des Druckmittelspeichers und schaltet ausschließlich im automatischen Bremseneingriff zur Antriebs- und/oder Fahrdynamikregelung in seine Offenstellung. Zwischen dem Mehrwegeventil 1 und der Pumpe 6 mündet in die Druckmittelverbindung 4 ein weiterer Druckmittelkanal 7, der über das Vorladevolumen Vv hinaus gehendes Druckmittelvolumen des Druckmittelspeicher 5 aufnimmt. Ein Rückschlagventil 8 in der Funktion eines Vordruckventils sperrt den Druckmittelkanal 7 in Richtung des Druckmittelspeichers 5. An der Einmündungsstelle des Druckmittelkanals 7 in die Druckmittelverbindung 4 schließt sich gleichfalls eine Druckmittelverbindung zum Bremsdruckgeber 9 an, in die ein in der Grundstellung elektromagnetisch nicht erregtes Mehrwegeventil 2 sowohl die Saugseite der Pumpe 6 als auch den Druckmittelkanal 7 vom Bremsdruckgeber 9 trennt. Alle vorbezeichneten Mehrwegeventile 12 sind als 2/2-Wegeventile ausgeführt.

Nachfolgend wird die Wirkungsweise der erfindungsgemäßen Bremsanlage näher erläutert. Um für einen automatischen Bremseneingriff eine schnelle Bereitstellung des Pumpendrucks sicherstellen zu können, wird vorzugsweise mittels eines Pumpentestlaufs für eine bestimmte Zeitdauer von der Pumpe 6 aus dem Bremsdruckgeber 9 über das offen geschaltete Mehrwegeventil 2 Druckmittel aus dem Vorratsbehälter des Bremsdruckgebers 9 entnommen und über die offenen Druckmodulationsventile 17,17' dem Druckmittelspeicher 5 zugeführt. Das Mehrwegeventil 1 verharrt in seiner abbildungsgemäßen Sperrstellung, so daß von der Pumpe 6 gefördertes Druckmittel den Ladekolben 10 in eine Position bewegt, die der Teilaufladung und damit dem notwendigen Vorladevolumen Vv der Pumpe 6 zum raschen Ansprechen der Radbremse 12 entspricht. Dabei gelangt der Ladekolben 10 mit seiner Manschettendichtung 18 in eine Schnüffelstellung, die mehr oder weniger zu einer Rückführung von überschüssigem Druckmittel in den Druckmittelkanal 7 führt. Überschüssiges Druckmittel gelangt somit in Richtung der Saugseite der Pumpe 6. Mit Abschluß des Pumpentestlaufs steht sodann im Druckmittelspeicher 5 ein Vorladevolumen Vv für die Pumpe 6 zur Verfügung, das mit dem Einsetzen eines automatischen Bremseneingriffs zur Antriebs- und/oder Fahrdynamikregelung durch die Offenschaltung des Mehrwegeventils 1 mit Hilfe der Pumpe 6 zu einem schnellen Druckaufbau an der Radbremse 12 führt. Zur Bremsschlupfregelung bleibt hingegen das Mehrwegeventil 1 geschlossen, so daß die Pumpe unter Zuhilfenahme fußkraftproportionaler Betätigung des Bremsdruckgebers 9 über das offen geschaltete Mehrwegeventil 2 anfänglich hinreichend mit Druckmittel versorgt wird. Das während einer Bremsdruckabbauphase über das offen geschaltete Druckmodulationsventil 17' in den Druckmittelspeicher 5 einströmende Druckmittelvolumen verschiebt sodann den Ladekolben 10 über die dargestellte Position der Teilaufladung hinaus, bis dieser nahezu auf Anschlag voll ausgesteuert ist. Aus der Zwischenspeicherung von Druckmittel im Druckspeicher 5 sorgt dieser bei Bedarf für eine hinreichend schnelle Belieferung der Pumpe 6 mit Druckmittel bei geöffnetem Mehrwegeventil 1, während das Mehrwegeventil 2 gesperrt ist.

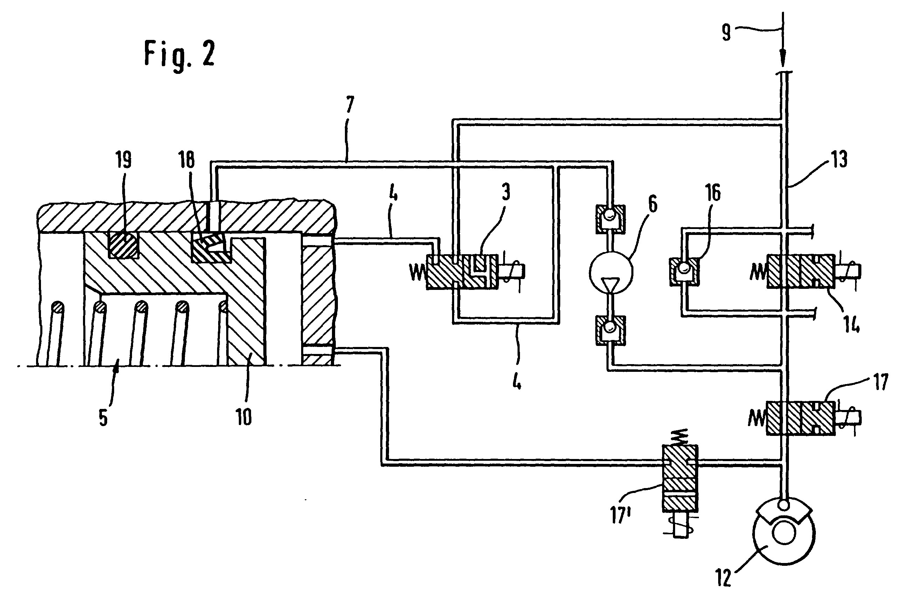

Die Figur 2 zeigt abweichend von Figur 1 eine schaltungstechnische Kombination der aus Figur 1 bekannten Mehrwegeventile 1 und 2, so daß in Figur 2 ein als 3/2-Wegeventil wirksames Mehrwegeventil 3 zur Anwendung gelangt, ohne daß es einer Veränderung des maßgeblichen Schaltungsaufbaues nach Figur 1 bedarf. Daher wird auf eine nochmalige Darstellung aller Einzelheiten von Figur 2 verzichtet und auf Figur 1 verwiesen. Die Wirkungsweise des Mehrwegeventils 3 wird nachfolgend kurz erläutert. In der gezeigten Grundstellung des Mehrwegeventils 3 ist die zur Saugseite der Pumpe 6 führende Druckmittelverbindung 7 gesperrt. Gleiches gilt für die Druckmittelverbindung des Bremsdruckgebers 9 an die Saugseite der Pumpe 6. In der gezeigten Schaltstellung des Mehrwegeventils 3 besteht somit ausschließlich bei einer über die Teilaufladung des Druckmittelspeichers 5 hinausgehenden Position des Ladekolbens 10 eine Druckmittelversorgung aus dem Druckmittelspeicher 5 über den Druckmittelkanal 7 zur Saugseite der Pumpe 6. Wie bereits in Figur 1 erwähnt, wird im Falle einer Bremsschlupfregelung der Kolben 10 in Richtung Vollaussteuerung (Vollaufladung) verschoben, sobald infolge einer Druckabbauphase Druckmittel der Radbremse 12 über das elektromagnetisch offen geschaltete Druckmodualtionsventil 17' in den Druckmittelspeicher 5 gelangt. Zum Zwecke eines Bremseneingriffs zur Antriebs- und/oder Fahrdynamikregelung schaltet das Mehrwegeventil 3 elektromagnetisch erregt in eine Stellung, in der sowohl das Vorladevolumen Vv über die Druckmittelverbindung 4 als auch die Druckmittelverbindung des Bremsdruckgebers 9 zur Saugseite der Pumpe freigegeben sind. Das Vorladevolumen Vv wird sich sodann infolge der langen widerstandsbehafteten Druckmittelverbindung zum Bremsdruckgeber 9 weitgehend in Richtung der Saugseite der Pumpe 6 bewegen, so daß eine für den schnellen Druckaufbau in der Radbremse 12 gewünschte Druckdynamik durch den Vorladeeffekt des Druckmittelspeichers 5 gewährleistet ist.

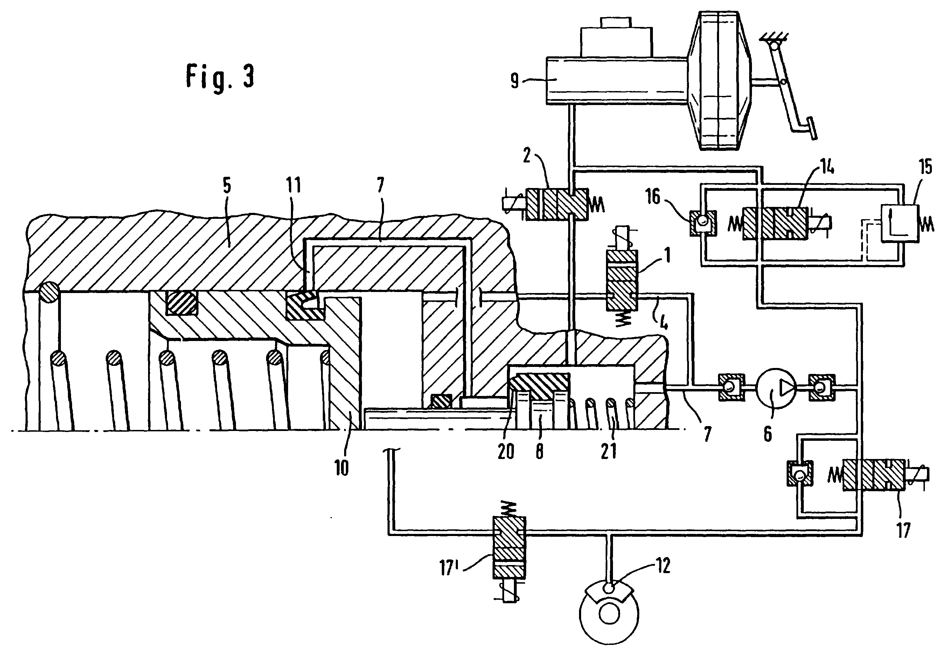

Die Figur 3 zeigt eine Konstruktion des aus Figur 1, 2 prinzipiell bekannten Rückschlagventils 8 im Zusammenwirken mit dem Ladekolben 10 des Druckmittelspeichers 5. Hierzu ist vorgesehen, daß an der dem Ladekolben 10 entgegengelegenen Stirnfläche des Speichergehäuses eine Durchgangsöffnung vorgesehen ist, in der das Rückschlagventil 8 in der Funktion eines Vordruckventils mit seinem Kolbenschaft abgedichtet geführt ist. An den Kolbenschaft gliedert sich ein erweiterter Kolbenquerschnitt an, an dem eine Dichtfläche 20 vorgesehen ist, die unter Wirkung einer Druckfeder 21 in Richtung auf eine Gehäusestufe angepreßt ist. In der abbildungsgemäßen Schaltstellung des Rückschlagventils 6 sperrt dieses den Druckmittelkanal 7 infolge der Vorladeposition des Ladekolbens 10 sowie auch mit Überschreiten der Teilaufladestellung in Richtung Vollaufladung. Der Druckmittelkanal 7 wird vom Hub des Ladekolbens 10 geschlossen bzw. freigegeben, wobei nunmehr in Figur 3 der Druckmittelkanal 7 zwischen dem Sitz des Rückschlagventils 8 und dem das Rückschlagventil 8 aufnehmenden Ringraum des Druckmittelspeichers 5 einmündet. Das Rückschlagventil 8 wird zu Beginn eines automatischen Bremseneingriffs zur Antriebs- und/oder Fahrdynamikregelung vom Ladekolben 10 kontaktiert, sobald das im Druckmittelspeicher 5 befindliche Vorladevolumen Vv über das elektromagnetisch in Offenstellung geschaltete Mehrwegeventil 1 zur Saugseite der Pumpe 6 gelangt. Mit Überschreiten der Federvorspannkraft am Rückschlagventil 8 gibt sodann das Rückschlagventil 8 entgegen seiner Federwirkung den Druckmittelkanal 7 zur Saugseite der Pumpe 6 frei. Durch das beim automatischen Bremseneingriff gleichfalls elektromagnetisch in Offenstellung geschaltete weitere Mehrwegeventil 2, das mit dem Bremsdruckgeber 9 in Verbindung steht, gelangt mit dem Erschöpfen des Vorladevolumens Vv und Umgehung des Druckmittelspeichers 5 Druckmittel vom Bremsdruckgeber 9 zur Saugseite der Pumpe 6. Zur Teilaufladung und damit zur Wiederherstellung des Vorladevolumens Vv im Druckmittelspeicher 5, ist das Mehrwegeventil 1 in der Druckmittelverbindung 4 wieder geschlossen, so daß die Pumpe 6 über das offene Mehrwegeventil 2 aus dem Bremsdruckgeber 9 nachsaugen kann und über die offen geschalteten Druckmodulationsventile 17, 17' den Druckmittelspeicher 5 bis zum Erreichen der Schnüffelstellung des Ladekolbens 10 am Druckmittelkanal 7 aufläd. Das Rückschlagventil 8 verhindert gleichfalls wie in den vorangegangenen Ausführungsbeispielen nach Figur 1 und 2, daß aus dem während einer Blockierschutzregelung aufgeladene Druckmittelspeicher 5 Druckmittel zur Saugseite der Pumpe gelangt, solange das elektromagnetisch erregte Mehrwegeventil 2 offen verharrt. Im Blockierschutzfall erfolgt somit die Druckmittelversorgung der Pumpe 6 über die zwischen dem Trennventil 14 und dem Bremsdruckgeber 9 angeschlossene Druckmittelverbindung, so daß durch den Vordruck am Druckmittelspeicher 5 ein für den automatischen Bremseneingriff zur Anfahrschlupf- und/oder Fahrdynamikregelung gewünschter Füllungsgrad des Druckmittelspeichers 5 sichergestellt ist. Die zur Figur 3 nicht näher erläuterten Einzelheiten zum Bremskreisaufbau entsprechend denen der Figur 1.

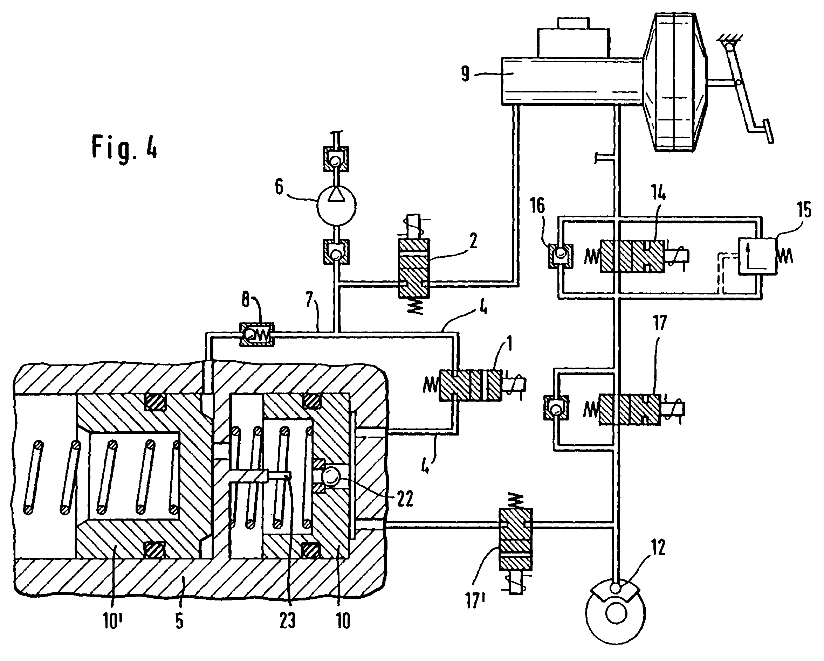

Die Figur 4 zeigt bei zu Figur 1 identischem Schaltungsaufbau eine Konstruktion des Druckmittelspeichers 5 mit zwei Ladekolben 10,10' in Tandemanordnung, wobei der Ladekolben 10 zur Versorgung des Druckmittelbedarfs der Pumpe 6 bei automatischem Bremseneingriff im Anfahrschlupf- und/oder Fahrdynamikregelfalle das Vorladevolumen zur Verfügung stellt, während der dahinterliegende Ladekolben 10', nach Überschreiten der für das Vorfüllvolumen maßgeblichen Teilaufladestellung des Ladekolbens 10, das von der Radbremse 12 abgelassene Druckmittelvolumen aufnimmt. Hierzu sieht der Ladekolben 10 ein Aufstoßventil 22 vor, das beim Erreichen der Teilaufladestellung von einem gehäusefesten Stößel 23 geöffnet wird, womit der dahinterliegende Ladekolben 10' vom Druckmittelvolumen der Radbremse 12 gleichfalls beaufschlagt wird. In der volumenaufnehmenden Kammer des Ladekolbens 10' schließt sich der Druckmittelkanal 7 mit dem Rückschlagventil 8 an, so daß die Pumpe 6 erst mit Unterschreiten des durch das Rückschlagventil 8 eingestellten Vordrucks Druckmittel aus dem Laderaum des Ladekolbens 10' erhält. Folglich gelangt während einer Blockierschutzregelung das fußproportional im Bremsdruckgeber 9 beaufschlagte Druckmittel über das offen geschaltete Mehrwegeventil 2 zur Saugseite der Pumpe 6. Hingegen in der Anfahrschlupf- bzw. Fahrdynamikregelung gelangt das Vorladevolumen unter Wirkung des Ladekolbens 10 über die durch das Mehrwegeventil 1 geöffnete Druckmittelverbindung 4 zur Pumpensaugseite. Im Gegensatz zu den vorangegangenen Ausführungsbeispielen nach Figur 1 bis 3 bewegt sich der Ladekolben 10' in Abhängigkeit vom gewählten Vordruck des Rückschlagventils 8 nicht in einer Schnüffelstellung, da sowohl die Einstellung des Vorladevolumens als auch die während einer Blockierschutzregelung wirksame Aufladung des Druckmittelspeichers 5 durch getrennte, nacheinander zu betätigende Ladekolben 10,10' erfolgt.

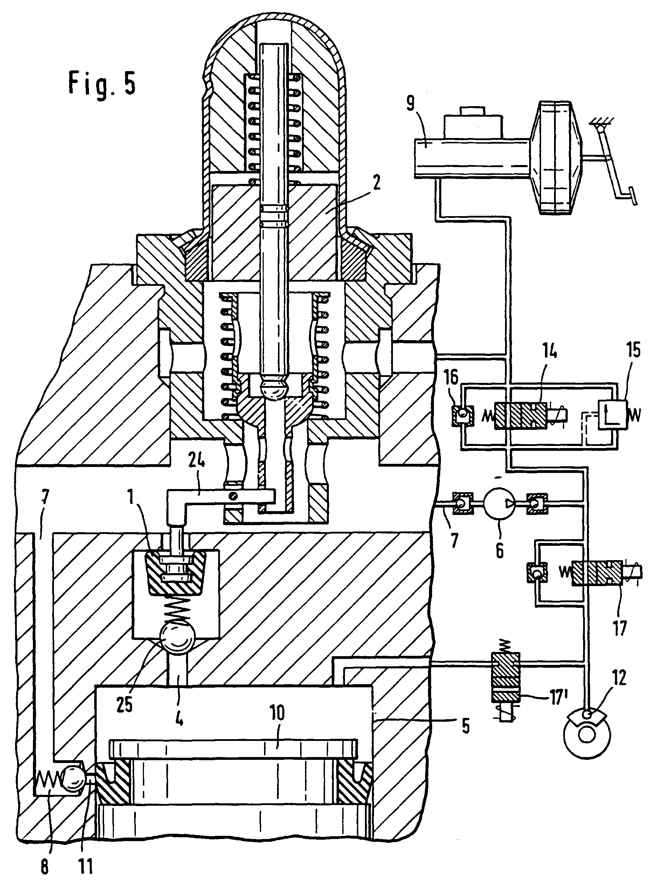

Die Figur 5 zeigt ein weiteres Ausführungsbeispiel der Erfindung, aus dem Einzelheiten zur Gestaltung des Mehrwegeventils 2 und des Mehrwegeventils 1 hervorgehen. Das Mehrwegeventil 1 wird bei elektromagnetischer Ansteuerung des Mehrwegeventils 2 mechanisch geöffnet, in dem ein drehgelenkig im Gehäuse des Mehrwegeventils 2 gelagerter Hebel 24 den Stößel des Mehrwegeventils 1 betätigt. In der elektromagnetisch betätigten Offenstellung des Mehrwegeventils 2 besteht sodann eine offene Druckmittelverbindung zwischen dem Bremsdruckgeber 9 und der Saugseite der Pumpe 6. Gleichfalls ist durch die Hebelbetätigung Mehrwegeventils 1 eine hydraulische Verbindung zwischen dem Vorfüllvolumen des Druckmittelspeichers 10 hergestellt, solange der Druck im Vorfüllraum des Druckmittelspeichers 10 den Druck eines zwischen dem Mehrwegeventil 1 und dem Druckmittelspeicheranschluß angeordneten Kugelrückschlagventils 25 übersteigt. Analog zu den vorangegangenen Ausführungsbeispielen sorgt ein Rückschlagventil 8 für den im Druckmittelspeicher 5 gewünschten Vordruck, so daß in der Regel nur bei Unterschreitung dieses Vordrucks Druckmittel über das Rückschlagventil 8 in Richtung der Pumpe 6 entweichen kann. Alle vorbeschriebenen Funktionselemente als auch die weiteren für eine Druckregelung erforderlichen Ventile befinden sich in einem gemeinsamen Gehäuse, so daß sich eine kompaktbauende Bremsanlage ergibt. Die Funktionsweise der Bremsanlage nach Figur 5 entspricht bis auf Ausnahme der mechanischen Betätigung des Mehrwegeventils 1 durch das Mehrwegeventil 2 den zu Figur 1 bis 4 beschriebenen schaltungstechnischen Einzelheiten.

Als bedeutsam für die Erfindung erweist sich, daß zum schnellen Bremsdruckaufbau mittels Pumpe ein bedarfsgerechtes Ladevolumen des Druckmittelspeichers zur Verfügung steht.

Dieses lokale Ladevolumen im Druckmittelspeicher kann somit von der Pumpe beim Anlaufen mit vollem volumetrischem Wirkungsgrad zur Radbremse geliefert werden.

### Bezugszeichenliste

- 1: Mehrwegeventil
- 2: Mehrwegeventil
- 3: Mehrwegeventil
- 4: Druckmittelverbindung
- 5: Druckmittelspeicher
- 6: Pumpe
- 7: Druckmittelkanal
- 8: Rückschlagventil
- 9: Bremsdruckgeber
- 10: Ladekolben
- 10': Ladekolben
- 11: Schnüffelbohrung
- 12: Radbremse
- 13: Hauptdruckleitung
- 14: Trennventil
- 15: Druckbegrenzerventil
- 16: Rückschlagventil
- 17: Druckmodulationsventil
- 18: Manschettendichtung
- 19: Ringdichtung
- 20: Dichtfläche
- 21: Druckfeder
- 22: Aufstoßventil
- 23: Stößel
- 24: Hebel
- 25: Kugelrückschlagventil

## Patentansprüche

1. Hydraulische Kraftfahrzeugbremsanlage mit Bremsschlupfregelung und automatischem Bremseneingriff zur Antriebs- und/oder Fahrdynamikregelung,
- mit einem Bremsdruckgeber (9), der über ein erstes Druckmodulationsventil (17) mit wenigstens einer Radbremse (12) und einem weiteren Druckmodulationsventil (17') mit einem Druckmittelspeicher (5) hydraulisch verbindbar ist,
- mit einer Pumpe (6), die mit ihrer Saugseite am Druckmittelspeicher (5) und mit ihrer Druckseite mit einem vom Bremsdruckgeber (9) zur Radbremse (12) führenden Druckmittelpfad, der das erste Druckmodulations ventil aufweist, in Verbindung steht, wobei eine Teilaufladung des Druckmittelspeichers (5), in der die Speicherkapazität des Druckmittelspeichers (5) nicht erschöpft ist, vorgesehen ist, wozu die Druckmittelverbindung (4) des Druckmittelspeichers (5) mit der Saugseite der Pumpe (6) absperrbar ist und nach dem Erreichen der maximalen Teilaufladung überschüssiges Druckmittelvolumen aus dem Druckmittelspeicher (5) ableitbar ist, und
- mit einem in die Druckmittelverbindung (4) vom Druckmittelspeicher (5) zur Saugseite der Pumpe (6) einmündenden Druckmittelkanal (7), der nach dem Erreichen des Teilaufladezustandes des Druckmittelspeichers (5) Druckmittel aufnimmt, **dadurch gekennzeichnet**, daß nach dem Erreichen der maximalen Teilaufladung ein Ladekolben (10) des Druckmittelspeichers (5) eine zum Druckmittelkanal (7) führende Schnüffelbohrung (11), durch die Druckmittel in Richtung der Saugseite der Pumpe (6) gelangt, freigibt.

2. Hydraulische Kraftfahrzeugbremsanlage nach Anspruch 1, **dadurch gekennzeichnet**, daß in der Druckmittelverbindung (4) vom Druckmittelspeicher (5) zur Saugseite der Pumpe (6) ein Mehrwegeventil (1,3) angeordnet ist.

3. Hydraulische Kraftfahrzeugbremsanlage nach Anspruch 1, **dadurch gekennzeichnet**, daß der Druckmittelkanal (7) zwischen dem Anschluß des Mehrwegeventils (1,3) an die Saugseite der Pumpe (6) in die Druckmittelverbindung (4) einmündet.

4. Hydraulische Kraftfahrzeugbremsanlage nach Anspruch 1, **dadurch gekennzeichnet**, daß in Druckmittelkanal (7) ein in Richtung des Druckmittelspeichers (5) sperrendes Rückschlagventil (8) angeordnet ist, das einen den Teilaufladezustand charakterisierenden Vordruck des Ladevolumens im Druckmittelspeicher (5) einstellt.

5. Hydraulische Kraftfahrzeugbremsanlage nach Anspruch 2, **dadurch gekennzeichnet**, daß der Bremsdruckgeber (9) über ein Mehrwegeventil (2,3) mit dem am Druckmittelspeicher (5) angeschlossenen Druckmittelkanal (7) verbindbar ist.

6. Hydraulische Kraftfahrzeugbremsanlage nach Anspruch 1, **dadurch gekennzeichnet**, daß der Druckmittelkanal (7) von einem Ladekolben (10) des Druckmittelspeichers (5) hubabhängig verschließbar ist.

7. Hydraulische Kraftfahrzeugbremsanlage nach Anspruch 5, **dadurch gekennzeichnet**, daß das zwischen dem Druckmittelkanal (7) und dem Bremsdruckgeber (9) angeordnete Mehrwegeventil (2) elektromagnetisch und das in der Druckmittelverbindung (4) eingesetzte Mehrwegeventil (1) durch das elektromagnetisch betätigbare Mehrwegeventil (2) mechanisch betätigbar ist.

8. Hydraulische Kraftfahrzeugbremsanlage mit Bremsschlupfregelung und automatischem Bremseneingriff zur Antriebs- und/oder Fahrdynamikregelung,
- mit einem Bremsdruckgeber (9), der über ein erstes Druckmodulationsventil (17) mit wenigstens einer Radbremse (12) und einem weiteren Druckmodulationsventil (17') mit einem Druckmittelspeicher (5) hydraulisch verbindbar ist,
- mit einer Pumpe (6), die mit ihrer Saugseite am Druckmittelspeicher (5) und mit ihrer Druckseite mit einem vom Bremsdruckgeber (9) zur Radbremse (12) führenden Druckmittelpfad, der das erste Druckmodulationsventil aufweist, in Verbindung steht, wobei eine Teilaufladung des Druckmittelspeichers (5), in der die Speicherkapazität des Druckmittelspeichers (5) nicht erschöpft ist, vorgesehen ist, wozu die Druckmittelverbindung (4) des Druckmittelspeichers (5) mit der Saugseite der Pumpe (6) absperrbar ist und nach dem Erreichen der maximalen Teilaufladung überschüssiges Druckmittelvolumen aus dem Druckmittelspeicher (5) ableitbar ist, und
- mit einem in die Druckmittelverbindung (4) vom Druckmittelspeicher (5) zur Saugseite der Pumpe (6) einmündenden Druckmittelkanal (7), der nach dem Erreichen des Teilaufladezustandes des Druckmittelspeichers (5) Druckmittel aufnimmt, **dadurch gekennzeichnet**, daß der Druckmittelspeicher (5) zwei Ladekolben (10,10') in Tandemanordnung aufweist, wobei der zweite Ladekolben (10') ausschließlich von dem über die maximale Teilaufladung hinausgehenden Druckmittelvolumen beaufschlagt ist und abhängig von einem durch ein Rückschlagventil (8) im Druckmittelkanal (7) eingestellten Vordruck die Pumpe (6) mit Druckmittel versorgt, während der erste Ladekolben (10) von dem aus der Radbremse (12) abgelassenen Druckmittelvolumen beaufschlagt ist, wobei das Druckmittelvolumen bei automatischem Bremseneingriff im Anfahrschlupf- und/oder Fahrdynamikregelfall die Pumpe (6) versorgt.

## Claims

1. Hydraulic automotive vehicle brake system with brake slip control and automatic brake management for traction control and/or driving dynamics control,
- including a braking pressure generator (9) which is hydraulically connectable to at least one wheel brake (12) by way of a first pressure modulation valve (17) and with a pressure fluid accumulator (5) by way of a second pressure modulation valve (17'),
- a pump (6) which is connected with its suction side to the pressure fluid accumulator (5) and with its pressure side to a pressure fluid conduit that extends from the braking pressure generator (9) to the wheel brake (12) and accommodates the first pressure modulation valve, wherein partial charging of the pressure fluid accumulator (5) which does not exhaust the storing capacity of the pressure fluid accumulator (5) is provided, to which end a pressure fluid connection (4) between the pressure fluid accumulator (5) and the suction side of the pump (6) can be closed and, upon attainment of the maximum partial charge, excessive pressure fluid volume can be withdrawn from the pressure fluid accumulator (5), and including
- a pressure fluid channel (7) which opens into the pressure fluid connection (4) between the pressure fluid accumulator (5) and the suction side of the pump (6) and takes up pressure fluid when the partial charge condition of the pressure fluid accumulator (5) is reached,
**characterized** in that, upon attainment of the maximum partial charge, a charging piston (10) of the pressure fluid accumulator (5) opens a breathering bore (11) which extends to the pressure fluid channel (7) and through which pressure fluid is conducted in the direction of the suction side of the pump (6).

2. Hydraulic automotive vehicle brake system as claimed in claim 1,
**characterized** in that a multi-way valve (1, 3) is arranged in the pressure fluid connection (4) between the pressure fluid accumulator (5) and the suction side of the pump (6).

3. Hydraulic automotive vehicle brake system as claimed in claim 1,
**characterized** in that the pressure fluid channel (7) opens into the pressure fluid connection (4) between the port of the multi-way valve (1, 3) and the suction side of the pump (6).

4. Hydraulic automotive vehicle brake system as claimed in claim 1,
**characterized** in that a non-return valve (8) which closes in the direction of the pressure fluid accumulator (5) is arranged in the pressure fluid channel (7) to adjust a pilot pressure of the charging volume in the pressure fluid accumulator (5) that characterizes the partial charge condition.

5. Hydraulic automotive vehicle brake system as claimed in claim 2,
**characterized** in that the braking pressure generator (9) is connectable to the pressure fluid channel (7) connected to the pressure fluid accumulator (5) by way of a multi-way valve (2, 3).

6. Hydraulic automotive vehicle brake system as claimed in claim 1,
**characterized** in that the pressure fluid channel (7) is closable stroke-responsively by a charging piston (10) of the pressure fluid accumulator (5).

7. Hydraulic automotive vehicle brake system as claimed in claim 5,
**characterized** in that the multi-way valve (2) interposed between the pressure fluid channel (7) and the braking pressure generator (9) is electromagnetically operable, and the multi-way valve (1) inserted into the pressure fluid connection (4) is mechanically operable by the electromagnetically operable multi-way valve (2).

8. Hydraulic automotive vehicle brake system with brake slip control and automatic brake management for traction control and/or driving dynamics control, including
- a braking pressure generator (9) which is hydraulically connectable to at least one wheel brake (12) by way of a first pressure modulation valve (17) and with a pressure fluid accumulator (5) by way of a second pressure modulation valve (17'),
- a pump (6) which is connected with its suction side to the pressure fluid accumulator (5) and with its pressure side to a pressure fluid conduit that extends from the braking pressure generator (9) to the wheel brake (12) and accommodates the first pressure modulation valve, wherein partial charging of the pressure fluid accumulator (5) which does not exhaust the storing capacity of the pressure fluid accumulator (5) is provided, to which end a pressure fluid connection (4) between the pressure fluid accumulator (5) and the suction side of the pump (6) can be closed and, upon attainment of the maximum partial charge, excessive pressure fluid volume can be withdrawn from the pressure fluid accumulator (5), and including
- a pressure fluid channel (7) which opens into the pressure fluid connection (4) between the pressure fluid accumulator (5) and the suction side of the pump (6) and takes up pressure fluid when the partial charge condition of the pressure fluid accumulator (5) is reached,
**characterized** in that the pressure fluid accumulator (5) includes two charging pistons (10, 10') in a tandem arrangement, wherein the second charging piston (10') is exclusively acted upon by the pressure fluid volume which is in excess of the maximum partial charge and supplies the pump (6) with pressure fluid in response to a pilot pressure adjusted by a non-return valve (8) in the pressure fluid channel (7), while the first charging piston (10) is acted upon by the pressure fluid volume discharged from the wheel brake (12), the said pressure fluid volume being delivered to the pump (6) during automatic brake management in traction slip and/or driving dynamics control operations.

## Revendications

1. Système de freinage hydraulique de véhicule automobile à régulation de glissement de freinage et intervention de frein automatique pour la régulation de traction et/ou la régulation de comportement dynamique de conduite, comportant
- un générateur de pression de frein (9), qui peut être relié hydrauliquement, par l'intermédiaire d'une première valve de modulation de pression (17), à au moins un frein de roue (12) et, par l'intermédiaire d'une autre valve de modulation de pression (17'), à un accumulateur d'agent de pression (5),
- une pompe (6), qui communique par son côté aspiration avec l'accumulateur d'agent de pression (5) et par son côté refoulement avec un chemin d'agent de pression qui mène du générateur de pression de frein (9) au frein de roue (12) et qui comporte la première valve de modulation de pression, tandis qu'il est prévu une charge partielle de l'accumulateur d'agent de pression (5) dans laquelle la capacité d'accumulation de l'accumulateur d'agent de pression (5) n'est pas épuisée et qu'à cet effet, la liaison d'agent de pression (4) de l'accumulateur d'agent de pression (5) avec le côté aspiration de la pompe (6) peut être bloquée et, une fois la charge partielle maximale obtenue, l'excès de volume d'agent de pression peut être évacué de l'accumulateur d'agent de pression (5), et
- un conduit d'agent de pression (7) qui débouche dans la liaison d'agent de pression (4) menant de l'accumulateur d'agent de pression (5) au côté aspiration de la pompe (6) et qui, une fois atteint l'état de charge partielle de l'accumulateur d'agent de pression (5), reçoit de l'agent de pression, caractérisé en ce qu'une fois atteinte la charge partielle maximale, un piston de charge (10) de l'accumulateur d'agent de pression (5) libère un trou d'évacuation du type reniflard (11) qui mène au conduit d'agent de pression (7) et par lequel de l'agent de pression passe en direction du côté aspiration de la pompe (6).

2. Système de freinage hydraulique de véhicule automobile suivant la revendication 1, caractérisé en ce qu'une valve à plusieurs voies (1, 3) est disposée dans la liaison d'agent de pression (4) menant de l'accumulateur d'agent de pression (5) au côté aspiration de la pompe (6).

3. Système de freinage hydraulique de véhicule automobile suivant la revendication 1, caractérisé en ce que le conduit d'agent de pression (7) débouche en un emplacement intermédiaire sur le raccordement de la valve à plusieurs voies (1, 3) au côté aspiration de la pompe (6).

4. Système de freinage hydraulique de véhicule automobile suivant la revendication 1, caractérisé en ce qu'il est prévu, disposée dans le conduit d'agent de pression (7), une valve antiretour (8) qui bloque en direction de l'accumulateur d'agent de pression (5) et qui règle une pression préalable du volume de charge dans l'accumulateur d'agent de pression (5), pression qui caractérise l'état de charge partielle.

5. Système de freinage hydraulique de véhicule automobile suivant la revendication 2, caractérisé en ce que le générateur de pression de frein (9) peut être relié par l'intermédiaire d'une valve à plusieurs voies (2, 3) au conduit d'agent de pression (7) raccordé à l'accumulateur d'agent de pression (5).

6. Système de freinage hydraulique de véhicule automobile suivant la revendication 1, caractérisé en ce que le conduit d'agent de pression (7) peut être obturé, d'une manière dépendant de la course, par un piston de charge (10) de l'accumulateur d'agent de pression (5).

7. Système de freinage hydraulique de véhicule automobile suivant la revendication 5, caractérisé en ce que la valve à plusieurs voies (2) disposée entre le conduit d'agent de pression (7) et le générateur de pression de frein (9) peut être actionnée électromagnétiquement et la valve à plusieurs voies (1) disposée dans la liaison d'agent de pression (4) peut être actionnée mécaniquement au moyen de la valve à plusieurs voies (2) à actionnement électromagnétique.

8. Système de freinage hydraulique de véhicule automobile à régulation de glissement de freinage et intervention de frein automatique pour la régulation de traction et/ou la régulation de comportement dynamique de conduite, comportant
- un générateur de pression de frein (9), qui peut être relié hydrauliquement, par l'intermédiaire d'une première valve de modulation de pression (17), à au moins un frein de roue (12) et, par l'intermédiaire d'une autre valve de modulation de pression (17'), à un accumulateur d'agent de pression (5),
- une pompe (6), qui communique par son côté aspiration avec l'accumulateur d'agent de pression (5) et par son côté refoulement avec un chemin d'agent de pression qui mène du générateur de pression de frein (9) au frein de roue (12) et qui comporte la première valve de modulation de pression, tandis qu'il est prévu une charge partielle de l'accumulateur d'agent de pression (5) dans laquelle la capacité d'accumulation de l'accumulateur d'agent de pression (5) n'est pas épuisée et qu'à cet effet, la liaison d'agent de pression (4) de l'accumulateur d'agent de pression (5) avec le côté aspiration de la pompe (6) peut être bloquée et, une fois la charge partielle maximale obtenue, l'excès de volume d'agent de pression peut être évacué de l'accumulateur d'agent de pression (5), et
- un conduit d'agent de pression (7) qui débouche dans la liaison d'agent de pression (4) menant de l'accumulateur d'agent de pression (5) au côté aspiration de la pompe (6) et qui, une fois atteint l'état de charge partielle de l'accumulateur d'agent de pression (5), reçoit de l'agent de pression, caractérisé en ce que l'accumulateur d'agent de pression (5) comporte deux pistons de charge (10, 10') en agencement tandem, le second piston de charge (10') étant soumis exclusivement à l'action du volume d'agent de pression qui excède la charge partielle maximale et alimentant la pompe (6) en agent de pression en fonction d'une pression préalable réglée au moyen d'une valve antiretour (8) située dans le conduit d'agent de pression (7), tandis que le premier piston de charge (10) est soumis à l'action du volume d'agent de pression relâché par le frein de roue (12), le volume d'agent de pression alimentant la pompe (6) lors d'une intervention de frein automatique dans le cas de régulation de glissement de démarrage et/ou de régulation de comportement dynamique de conduite.
